# NEW EUROPEAN PATENT SPECIFICATION

(11) **EP 0 247 610 B2**
(45) Date of publication and mention of the opposition decision: **20.10.1993**
(45) Mention of the grant of the patent: 16.08.1990
(21) Application number: 87107751.7
(22) Date of filing: 27.05.1987
(51) Int. Cl.: G01P 1/02, G01P 3/488

(54) **Electromagnetic power generating type rotation sensor**
Stromerzeugender elektromagnetischer Drehfühler
Capteur électromagnétique de rotation produisant du courant

(30) Priority: 30.05.1986 JP 126602/86
(43) Date of publication of application: 02.12.1987
(73) Proprietor: SUMITOMO ELECTRIC INDUSTRIES, LTD., Osaka-shi, Osaka 541 (JP); SANKEN AIRPAX LTD., Tokyo (JP)
(72) Inventor: Saito, Hidetoshi Itami Works of Sumitomo, Itami-shi Hyogo-ken (JP); Kume, Masahiro Itami Works of Sumitomo, Itami-shi Hyogo-ken (JP); Morita, Sakae Sanken Airpax Ltd., Toshima-ku Tokyo (JP)
(74) Representative: Patentanwälte Kirschner & Grosse

(56) References cited:
- DE-A- 2 255 960
- GB-A- 2 153 534
- US-A- 3 980 913

## Description

### BACKGROUND OF THE INVENTION

### Field of the Invention

The present invention relates to an electromagnetic power generating type rotation sensor for detecting the rotational speed of a rotating member such as the wheel of an automobile.

### Description of the Prior Art

In general, an electromagnetic power generating type rotation sensor, a magnetic rotation sensor employing a magnetic resistor element or a Hall element and a photoelectric rotation sensor are known as sensors for detecting the rotational speed of a rotating member such as the wheel of an automobile. The electromagnetic power generating type rotation sensor is formed by a magnet, a magnetic pole piece and a voltage generating coil integrally contained in a case of metal or resin. The amount of magnetic flux in the magnetic pole piece is changed by the irregular surface of a magnetic gear serving as a magnetic rotator in proximity to the magnetic pole piece, thereby to generate AC voltage across a coil. The AC voltage thus generated is substantially proportionate to the number of revolutions of the magnetic gear while the frequency thereof is correctly proportionate to the number of revolutions of the magnetic gear, whereby the rotational speed can be detected by the generated AC voltage or the frequency thereof.

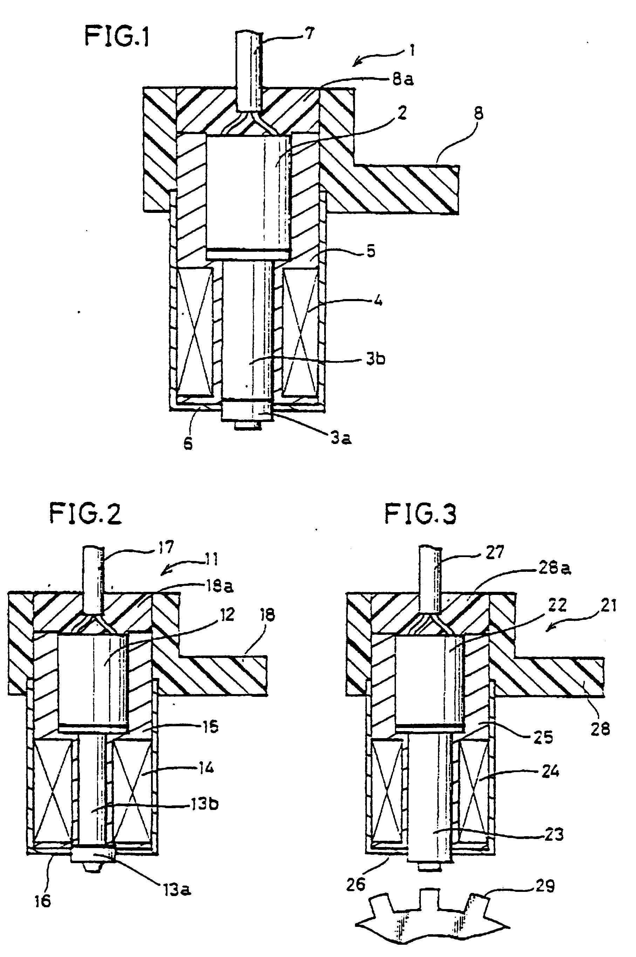

Fig. 3 is a sectional view showing a conventional electromagnetic power generating type rotation sensor. Referring to Fig. 3, numeral 21 indicates the rotation sensor, numeral 22 indicates a magnet, numeral 23 indicates a magnetic pole piece, numeral 24 indicates a coil, numeral 25 indicates a bobbin, numeral 26 indicates a case, numeral 27 indicates an output lead wire, numeral 28 indicates a bracket of resin for mounting the sensor, numeral 28a indicates a part filled with resin and numeral 29 indicates a peripheral part of a magnetic gear. The magnetic gear is mounted on a drive shaft of an automobile or the like, to rotate with the wheel of the automobile.

Magnetic flux of the magnet 2 passes through the magnetic pole piece 23, and the amount of such magnetic flux is changed by approximation to the irregular surface, i.e., projections and recesses of the outer peripheral part 29 of the magnetic rotator. Depending on the rate of change in the amount of magnetic flux to time, output voltage is generated across the coil 24, so that the rotational speed of the magnetic rotator closely related to the rotational speed of the wheel can be detected from the variation in frequency of the output voltage.

Detection of the rotational speed of the wheel is important for brake control of the wheel such as antilock control, and hence it is necessary to stably detect the rotational speed of the wheel under various conditions from low-speed to high-speed conditions. The electromagnetic power generating type rotation sensor is employed for an automobile orthe like since the same can be manufactured at a relatively low cost and is resistant against temperature change.

Such an electromagnetic power generating type rotation sensor employed for an automobile must be excellent in corrosion resistance since the same is mounted on a wheel part in bad environment. Thus, the magnetic pole piece must be made of an anticorrosive material. Further, such a sensor is adapted to detect the rotational speed of the wheel from the change in the amount of magnetic flux in the magnetic pole piece as hereinabove described, and hence the material for the magnetic pole piece must be excellent in magnetic property, i.e., saturation magnetic flux density. Thus, it is preferable that the material for the magnetic pole piece is excellent in both of magnetic property and corrosion resistance.

However, a material of high saturation magnetic flux density is generally inferior in corrosion resistance against rust or the like, whereby no conventional magnetic pole piece has sufficiently satisfied both of the aforementioned conditions.

An example of the above state of the art is WO-A-85/01112 which shows a rotation sensor having a pole piece which is encased in a housing and projects therefrom. The housing is welded to the pole piece.

DE-A- 33 35 684 shows a rotation sensor the pole piece of which is encased in a housing which extends across the front end of the pole piece. The housing is welded to the pole piece on the entire front face of the pole piece.

### SUMMARY OF THE INVENTION

Accordingly, an object of the present invention is to provide an electromagnetic power generating type rotation sensor satisfactorily applicable to an automobile, by employing magnetic pole piece which is excellent in both of magnetic property and corrosion resistance.

This object is solved by the rotation sensor as claimed in claim 1.

In the electromagnetic power generating type rotation sensor according to the present invention, the inner magnetic pole piece is provided in a position not being exposed to the external environment, whereby the same can be prepared by a material of excellent magnetic property with no requirement for corrosion resistance.

Further, the outer magnetic pole piece can be prepared by a material of excellent corrosion resistance, substantially with no consideration of magnetic property. According to the present invention, the magnetic pole piece is thus divided to be provided with different characteristics which cannot be obtained by a single material.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a sectional view showing an embodiment of the present invention;
Fig. 2 is a sectional view showing another embodiment of the present invention; and
Fig. 3 is a sectional view showing a conventional electromagnetic power generating type rotation sensor.

### DESCRIPTION OF THE PREFERRED EMBODIMENTS

Fig. 1 is a sectional view showing an embodiment of the present invention. Referring to Fig. 1, an end of an inner magnetic pole piece 3b is mounted on a magnet 2, which is contained in a bobbin 5 with the inner magnetic pole piece 3b. An outer magnetic pole piece 3a is closely joined with the other end of the inner magnetic pole piece 3b by welding, to define no clearance. The inner magnetic pole piece 3b is made of electromagnetic soft iron, which is inferior in corrosion resistance but excellent in magnetic property, while the outer magnetic pole piece 3a is made of SUS430 (stainless steel material), which is a magnetic substance of excellent corrosion resistance.

A coil wire is wound around the outer periphery of the bobbin 5 provided with the inner magnetic pole piece 3b, to form a coil 4. Both ends of the coil 4 are connected to an output lead wire 7 respectively, to provide output voltage generated across the coil 4 to the exterior. The bobbin 5 and the coil 4 are contained in a case 6, and the outer magnetic pole piece 3a is arranged to partially project from the case 6. The outer magnetic pole piece 3a and the case 6 are sealed by welding so that the interior of the case 6 is not exposed to the external environment. A cylindrical bracket 8 for mounting the entire sensor is provided in an outer part of the bobbin 5. The interior of the bracket 8 is filled with resin to define a resin-filled part 8a.

This embodiment of the aforementioned structure can be manufactured through the following steps, for example:

First, a cylindrical spacer, which is longer than the depth of the case 6, is inserted in the cylindrical case 6, and thereafter the bracket 8 of, e.g., nylon resin is formed by injection molding. Then the spacer is taken out from the case 6, to obtain a cylindrical body formed by the case 6 connected with the bracket 8. A sensor element part formed by the magnet 2, the inner magnetic pole piece 3b, the outer magnetic pole piece 3a, the bobbin 5 and the coil 4 and the output lead wire 7 connected thereto are inserted in the cylindrical body. Then the interior of the bracket 8 is filled with resin such as epoxy resin, to define the resin-filled part 8a.

In the embodiment as shown in Fig. 1, the inner magnetic pole piece 3b is provided within the case 6 not to be exposed to the external environment as hereinabove described, whereby the inner magnetic pole piece 3b is not corroded by rust or the like even if the same is made of electromagnetic soft iron, which is inferior in corrosion resistance. Further, the outer magnetic pole piece 3a exposed to the external environment is made of the stainless steel material of SUS430, which is excellent in corrosion resistance, whereby the same can be employed under bad environment with no corrosion.

In addition, the inner magnetic pole piece 3b and the outer magnetic pole piece 3a are closely joined with each other by welding, thereby to suppress increase in magnetic resistance between the magnetic pole pieces 3a and 3b.

Although the inner magnetic pole piece 3b is made of electromagnetic soft iron of excellent magnetic property in the embodiment as shown in Fig. 1, the material therefor is not restricted to the electromagnetic soft iron, but a material of slightly inferior mechanical strength can also be employed in the present invention so far as the same is excellent in magnetic property. Further, although the outer magnetic pole piece 3a is made of by the stainless steel material of SUS430 in the aforementioned embodiment, the same can be prepared by other material so far as the material is excellent in corrosion resistance, as a matter of course.

Fig. 2 is a sectional view showing another embodiment of the present invention. Referring to Fig. 2, an outer magnetic pole piece 13a is larger in diameter than an inner magnetic pole piece 13b. Other structure is substantially similar to that of the embodiment as shown in Fig. 1. Namely, a sensor element part formed by a magnet 12, the inner magnetic pole piece 13b, the outer magnetic pole piece 13a, a bobbin 15 and a coil 14 is contained in a case 16 and a bracket 18 and an output lead wire 17 is connected to the sensor element part while a resin-filled part 18a is defined in the bracket 18.

The outer magnetic pole piece 13a may be made of a material of inferior magnetic property since corrosion resistance is more important. In such case, the outer magnetic pole piece 13a can be made larger in diameter than the inner magnetic pole piece 13b as shown in Fig. 2, to cope with reduction in magnetic property.

Although the present invention has been described and illustrated in detail, it is clearly understood that the same is by way of illustration and example only and is not to be taken by way of limitation, the scope of the present invention being limited only by the terms of the appended claims.

## Claims

1. An electromagnetic power generating type rotation sensor comprising :
a magnetic rotator mounted on an object to be detected, to rotate with said object and provided with an irregular surface on either its outer peripheral part and/or its side part;
a magnetic pole piece (3, 13) arranged in proximity to said either outer pheripheral part and/or side part of said magnetic rotator to alternately approach projection and recesses of said irregular surface thereby to cause change in the amount of magnetic flux,
a case (6) enclosing the pole piece (3,13) and being sealed to the front end of the pole piece, which projects from the case (6)
a coil (4, 14) for generating AC output voltage responsive to said change in the amount of magnetic flux of said magnetic pole piece to detect the rotational speed of said object from said AC output voltage,
characterized in that
said magnetic pole piece (3, 13) is divided into an outer magnetic pole piece (3a, 13a) provided in a position close to said either outer pheripheral part and/or side part of said magnetic rotator and an inner magnetic pole piece (3b, 13b), adjacent to said outer magnetic pole piece (3a, 13a), in that the case (6) is sealed to the outer pole piece (3a, 13a) whereby said inner magnetic pole piece (3b, 13b) is inwardly provided not to be exposed to the external environment, and in that
said outer magnetic pole piece (3a, 13a) is made of a material superior in corrosion resistance to that of said inner magnetic pole piece (3b, 13b).

2. An electromagnetic power generating type rotation sensor in accordance with claim 1, characterized in that said inner magnetic pole piece (3b, 13b) is made of a material superior in saturation magnetic flux density to said outer magnetic pole piece (3a, 13a).

3. An electromagnetic power generating type rotation sensor in accordance with claim 1 or claim 2, characterized in that said outer magnetic pole piece (3a, 13a) is larger in diameter than said inner magnetic pole piece (3b, 13b).

4. An electromagnetic power generating type rotation sensor in accordance with one of claims 1 to 3, characterized in that said outer magnetic pole piece (3a, 13a) and said inner magnetic pole piece (3b, 13b) are closelyjoined with each other by welding.

5. An electromagnetic power generating type rotation sensor in accordance with one of claims 1 to 4, characterized in that sait outer magnetic pole piece (3a, 13a) is made of stainless steel and said inner magnetic pole piece (3b, 13b) is made of electromagnetic soft iron.

## Patentansprüche

1. Stromerzeugender elektromagnetischer Drehfühler mit einem magnetischen Rotator, der an einem abzutastenden Objekt angeordnet ist, um sich mit dem Objekt zu drehen, und der eine unregelmäßige Oberfläche entweder auf seinem äußeren Umfangsteil und/oder seinem seitlichen Teil aufweist;
einem magnetischen Polstück (3, 13), das in der Nähe entweder des äußeren Umfangsteils und/oder des seitlichen Teils des magnetischen Rotators angeordnet ist, um sich alternierend Vorsprüngen und Ausnehmungen der unregelmäßigen Oberfläche zu nähern, um dadurch eine Veränderung im Betrag des Magnetflusses zu bewirken;
einem Gehäuse (6), welches das Polstück (3,13) umgibt und abdichtend an dem vorderen Ende des Polstücks angebracht ist, das von dem Gehäuse (6) hervorsteht,
einer Spule (4, 14) zum Erzeugen einer Ausgangswechselspannung in Reaktion auf die Veränderung im Betrag des Magnetflußes des magnetischen Polstücks, um die Drehgeschwindigkeit des Objekts aus der Ausgangswechselspannung zu ermitteln,
dadurch gekennzeichnet, daß
das magnetische Polstück (3, 13) in ein äußeres magnetisches Polstück (3a, 13a), welches entweder nahe dem äußeren Umfangsteil und/oder nahe dem seitlichen Teil des magnetischen Rotators angeordnet ist, und ein inneres magnetisches Polstück (3b, 13b), welches benachbart zu dem äußeren magnetischen Polstück (3a, 13a) angeordent ist, unterteilt ist,
daß das Gehäuse (6) abdichtend an dem äußeren Polstück (3a, 13a) angebracht ist, wobei das innere magnetische Polstück (3b, 13a) nach innen vorgesehen ist, um nicht der äußeren Umgebung ausgesetzt zu sein,
und daß das äußere magnetische Polstück (3a, 13a) aus einem Material mit einem höheren Korrosionsbeständigkeit als dem des inneren magnetischen Polstücks (3b, 13b) gefertigt ist.

2. Stromerzeugender elektromagnetischer Drehfühler nach Anspruch 1, dadurch gekennzeichnet, daß das innere magnetische Polstück (3b, 13b) aus einem Material mit einer höheren Sättigungs-Magnetflußdichte als die des äußeren magnetischen Polstücks (3a, 13a) gefertigt ist.

3. Stromerzeugender elektromagnetischer Drehfühler nach Anspruch 1 oder 2, dadurch gekennzeichnet, daß das äußere magnetische Polstück (3a, 13a) einen größeren Durchmesser aufweist als das innere magnetische Polstück (3b, 13b).

4. Stromerzeugender elektromagnetischer Drehfühler nach einem der Ansprüche 1 bis 3, dadurch gekennzeichnet, daß das äußere magnetische Polstück (3a, 13a) und das innere magnetische Polstück (3b, 13b) durch Schweißen eng miteinander verbunden sind.

5. Stromerzeugender elektromagnetischer Drehfühler nach einem der Ansprüche 1 bis 4, dadurch gekennzeichnet, daß das äußere magnetische Polstück (3a, 13a) aus rostfreiem Stahl und das innere magnetische Polstück (3b, 13b) aus elektromagnetischem Weicheisen hergestellt ist.

## Revendications

1. Capteur électromagnétique de rotation produisant du courant comprenant:
un rotor magnétique monté sur un objet à détecter, afin de tourner avec ledit objet et pourvu d'une surface irrégulière sur sa partie périphérique extérieure et/ou sur sa partie latérale;
une pièce de pôle magnétique (3,13) disposée à proximité de ladite partie périphérique extérieure et/ou partie latérale dudit rotor magnétique, afin d'approcher alternativement des saillies et des cavités de ladite surface irrégulière de manière à provoquer une variation de la valeur du flux magnétique,
un boîtier (6) contenant la pièce de pôle (3, 13) et fixé hermétiquement à l'extrémité avant de la pièce de pôle, qui se projette depuis le boîtier (6), une bobine (4, 14) servant à produire une tension alternative de sortie, en réponse à ladite variation de la valeur du flux magnétique de ladite pièce de pôle magnétique afin de détecter la vitesse de rotation dudit objet à partir de ladite tension alternative de sortie,
caractérisé en ce que
ladite pièce de pôle magnétique (3, 13) est divisée en une pièce de pôle magnétique extérieure (3a, 13a) prévue en un emplacement proche de ladite partie périphérique extérieure et/ou de la partie latérale dudit rotor magnétique et une pièce de pôle magnétique intérieure (3b, 13b), adjacente à ladite pièce de pôle magnétique extérieure (3a, 13a), en ce que
le boîtier (6) est fixé hermétiquement à la pièce de pôle extérieure (3a, 13a), dans lequel ladite pièce de pôle magnétique intérieure (3b, 13b) est prévue intérieure, de manière à ne pas être exposée à l'environnement extérieur, et en ce que ladite pièce de pôle magnétique extérieure (3a, 13a) est constituée en un matériau plus résistant à la corrosion que celui de ladite pièce de pôle magnétique intérieure (3b, 13b) .

2. Un capteur électromagnétique de rotation produisant du courant selon la revendication 1, caractérisé en ce que ladite pièce de pôle magnétique intérieure (3b, 13b) est constituée en un matériau présentant une densité de flux magnétique de saturation supérieure à celle de ladite pièce de pôle magnétique extérieure (3a, 13a).

3. Un capteur électromagnétique de rotation produisant du courant selon la revendication 1 ou 2, caractérisé en ce que ladite pièce de pôle magnétique extérieure (3a, 13a) est d'un diamètre supérieur à celui de ladite pièce de pôle magnétique intérieure (3b, 13b).

4. Un capteur électromagnétique de rotation produisant du courant selon l'une des revendications 1 à 3, caractérisé en ce que ladite pièce de pôle magnétique extérieure (3a, 13a) et ladite pièce de pôle magnétique intérieure (3b, 13b) sont intimement liées entre elles par soudage.

5. Un capteur électromagnétique de rotation produisant du courant selon l'une des revendications 1 à 4, caractérisé en ce que ladite pièce de pôle magnétique extérieure (3a, 13a) est en acier inoxydable et que ladite pièce de pole magnétique intérieure (3b, 13b) est en fer doux électromagnétique.
